# FASCICULE DE BREVET EUROPEEN

(11) **EP 1 859 173 B1**
(45) Date de publication et mention de la délivrance du brevet: **10.12.2008**
(21) Numéro de dépôt: 06700221.2
(22) Date de dépôt: 05.01.2006
(51) Int. Cl.: F16B 19/10, F16B 13/02, F16B 21/07

(54) **RIVET DE FIXATION**
FIXIERUNGSNIET
FIXING RIVET

(30) Priorité: 17.02.2005 FR 0501702
(43) Date de publication de la demande: 28.11.2007
(73) Titulaire: A. RAYMOND ET CIE, 38000 Grenoble (FR)
(72) Inventeur: BOUBTANE, Mohieddine, 38170 Seyssinet-Pariset (FR)
(74) Mandataire: Rüttgers, Joachim
(86) Numéro de dépôt international: PCT/EP2006/000050
(87) Numéro de publication internationale: WO 2006/087049

(56) Documents cités:
- US-A- 5 261 772

## Description

### Domaine technique de l'invention

L'invention est relative à un rivet de fixation comprenant un corps de retenue équipé de moyens d'accrochage, et une goupille d'actionnement destinée à déplacer les moyens d'accrochage vers une position active de verrouillage.

Un tel rivet de fixation permet un assemblage rapide d'un ou de plusieurs éléments, notamment en forme de panneaux ou de plaques, ayant chacun un trou.

### Etat de la technique

Les documents FR 2852639 et EP 1473449 décrivent un rivet en matière plastique, comportant une goupille centrale pouvant être enfoncée pour assurer le verrouillage de l'assemblage. Le démontage s'effectue soit en tirant ou en tournant la goupille, permettant de la faire remonter pour extraire le rivet. Le démontage peut être problématique dans le cas où le rivet est installé dans un trou circulaire, et où l'action de rotation ne s'exerce pas sur la goupille, mais sur l'ensemble du rivet. Ce dernier tourne alors sur lui-même, rendant le démontage impossible.

En cas d'installation d'un tel rivet plastique dans un environnement à fortes sollicitations, par exemple pour la fixation d'un écran de protection sous un moteur de véhicule automobile, la présence d'une goupille de verrouillage en plastique ne garantit pas une tenue mécanique suffisante, avec à terme une usure prématurée et un risque de rupture.

II existe d'autre part des rivets métalliques, dont la mise en place s'opère au moyen d'une pince spéciale provoquant par sertissage un bourrelet de retenue à l'arrière du support. Le bourrelet est obtenu par déformation irréversible de la matière, rendant le démontage impossible pour réutiliser le rivet. L'extraction du rivet nécessite la destruction de la tête au moyen d'une perceuse. Le rivet est donc à jeter après démontage.

### Objet de l'invention

L'objet de l'invention consiste à réaliser un rivet métallique pouvant être facilement monté et démonté sans outil, et bénéficiant d'une tenue mécanique élevée indépendamment de l'épaisseur de l'élément à fixer et du support.

Le rivet selon l'invention est **caractérisé en ce que**
- la goupille comporte un fût allongé équipé d'au moins un premier cran et un deuxième cran échelonnés longitudinalement le long du fût,
- le corps de retenue est réalisé à partir d'une tôle métallique découpée et pliée, ayant une première paire de pattes de guidage du fût (14), et une deuxième paire de pattes élastiques munies d'une série d'ergots d'accrochage assurant un verrouillage positif en fin de course d'enfoncement de la goupille dans le corps.

Selon un mode préférentiel de l'invention, la première paire de pattes de guidage est munie d'au moins une lamelle ressort coopérant soit avec le premier cran du fût dans une position haute de prémontage de la goupille, soit avec le deuxième cran dans une position basse de verrouillage. Les pattes d'accrochage de la deuxième paire sont plus longues que les pattes de guidage de la première paire, et comportent des extrémités recourbées l'une vers l'autre pour former une zone d'actionnement en V provoquant l'écartement desdites pattes d'accrochage lors de l'enfoncement de la goupille.

Le rivet métallique selon l'invention permet d'obtenir une bonne tenue mécanique et une résistance à l'arrachement élevée lorsque la goupille est en position basse de verrouillage. Le montage du rivet s'effectue sans outil, et plusieurs épaisseurs sont possibles pour le support et l'élément à fixer. Le démontage et l'extraction du rivet métallique s'effectue après déverrouillage et relèvement de la goupille.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue schématique en perspective du rivet métallique selon l'invention, la goupille étant représentée insérée dans le corps dans une position haute de prémontage ;
- les figures 2A et 2B sont des vues en élévation et en perspective de la goupille ;
- la figure 3A montre une vue en perspective du corps après l'enlèvement de la goupille ;
- les figures 3B, 3C et 3D sont respectivement des vues de profil, de face, et d'une tôle découpée avant pliage du corps de la figure 3A ;
- les figures 4A et 4B sont des vues en élévation et en perspective de l'insert ;
- la figure 5 représente une vue en perspective éclatée du dispositif d'assemblage ;
- la figure 6 montre le dispositif d'assemblage après mise en place du rivet ;
- les figures 7 et 8 sont des vues en coupe de la figure 6, respectivement lorsque la goupille se trouve dans la position haute de prémontage, et dans la position basse de verrouillage.

### Description d'un mode de réalisation préférentiel.

En référence aux figures, un rivet 10 métallique de fixation est composé d'une goupille 11 d'actionnement, et d'un corps 12 de retenue à l'intérieur duquel est introduite la goupille 11 pour l'assemblage d'un ou de plusieurs éléments.

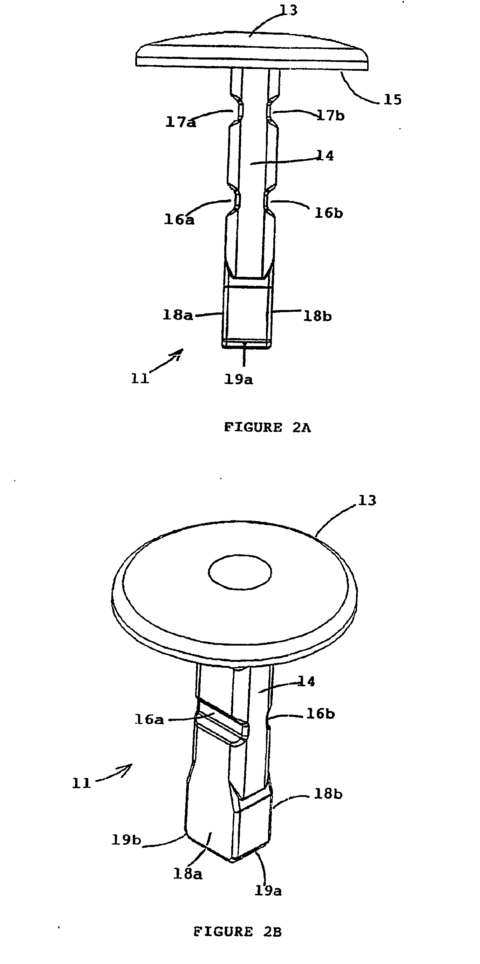

La goupille 11 (figures 2A et 2B) comporte une tête 13 large de section circulaire, laquelle est raccordée à un fût 14 allongé vertical. La face annulaire 15 inférieure de la tête 13 sert de surface d'actionnement pour relever la goupille 11 au moyen d'un outil lors du démontage. Le fût 14 possède une section sensiblement quadrangulaire, et est doté de premiers crans 16a, 16b et de deuxièmes crans 17a, 17b échelonnés le long de deux faces parallèles opposées pour assurer respectivement le maintien de la goupille 11 dans une position haute, et pour la verrouiller dans une position basse. Les deuxièmes crans 17a, 17b sont situés à un niveau supérieur directement sous la tête 13, tandis que les premiers crans 16a, 16b sont disposés à un niveau inférieur entre les deuxièmes crans 17a, 17b et la partie terminale. Chacun des quatre crans 16a, 16b, 17a, 17b présente un même profil chanfreiné en V pour diminuer les efforts de frottement lors de la mise en place ou du démontage de la goupille 11. La partie terminale est pourvue de deux zones d'appui 18a, 18b prévues sous les premiers crans 16a, 16b, et destinées à coopérer avec le corps 12. Sur les deux autres faces opposées du fût 14, les arêtes 19a, 19b de la partie terminale sont biseautées.

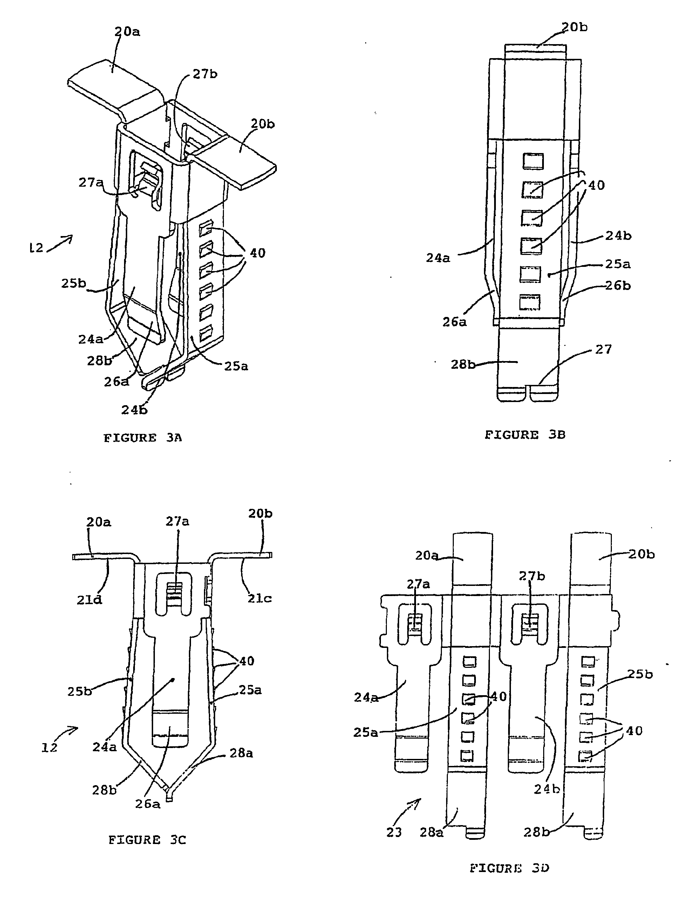

Sur les figures 3A à 3D, le corps 12 de retenue du rivet 10 est réalisé à partir d'une tôle 23 découpée et pliée, et comporte à la partie supérieure deux ailettes 20a, 20b latérales recourbées permettant de maintenir le corps 12 en appui sur la surface supérieure 21 de l'élément 22 à fixer: Le corps 12 comprend de plus une première paire de pattes 24a, 24b élastiques de guidage de la goupille 11, et une deuxième paire de pattes 25a, 25b élastiques équipées chacune d'une série d'ergots 40 d'accrochage assurant un verrouillage positif lors de l'insertion de la goupille 11.

Les pattes 24a, 24b de guidage de la première paire sont munies aux extrémités inférieures de deux languettes de pression 26a, 26b sollicitées élastiquement contre les flancs du fût 14 pour maintenir la goupille 11 dans la direction longitudinale d'insertion. Deux autres lamelles ressorts 27a, 27b font saillie à la partie supérieure vers l'intérieur des pattes 24a, 24b de guidage, et coopèrent avec les crans 16a, 16b, 17a, 17b pour bloquer la goupille 11 dans différentes positions.

Les pattes 25a, 25b de la deuxième paire sont plus longues que les pattes 24a, 24b de guidage de la première paire, et les extrémités 28a, 28b sont recourbées l'une vers l'autre pour former une zone d'actionnement en V autorisant l'écartement des pattes 25a, 25b lors de l'enfoncement de la goupille 11.

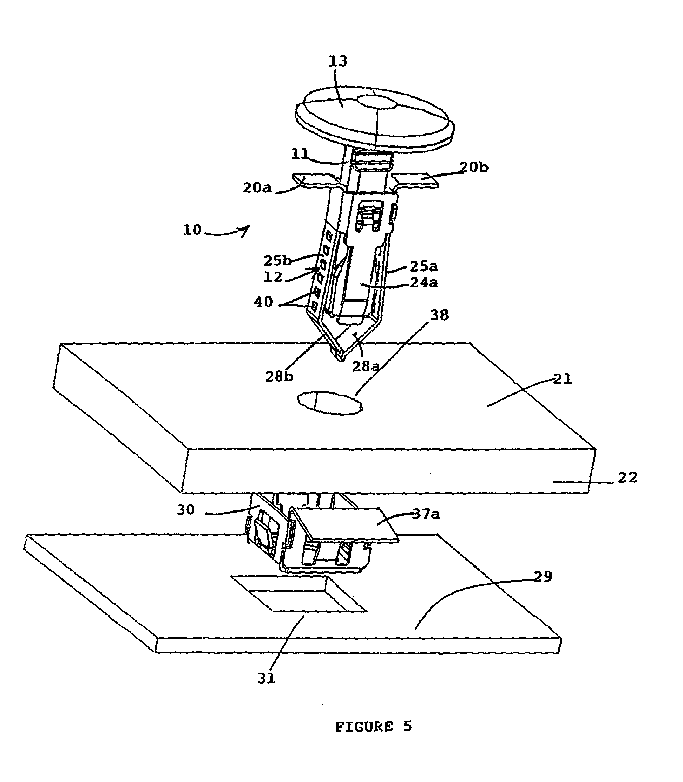

Le rivet 10 permet de fixer de façon démontable l'élément 22 sur un support 29. Le support 29 peut être un matériau rigide, par exemple métallique, ou un matériau souple, par exemple en plastique. Un insert 30 métallique est utilisé dans le cas d'un support 29 souple pour garantir la tenue mécanique, car l'accrochage des ergots 40 du rivet 10 s'effectuera sur une matière rigide. L'utilisation d'un insert 30 est aussi possible avec un support 29 rigide. A titre d'exemples, l'élément 22 à fixer et le support 29 sont illustrés sur les figures 5 à 8 par des plaques ou des panneaux.

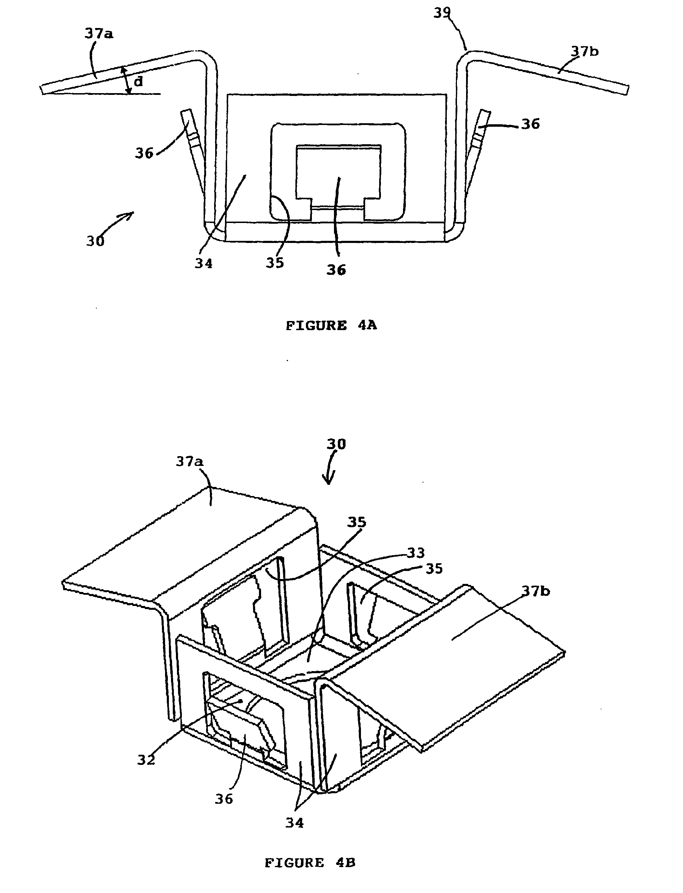

Selon les figures 4A et 4B, l'insert 30 métallique en tôle découpée et pliée, présente une forme sensiblement carrée destinée à être insérée dans un trou 31 de forme complémentaire du support 29. L'insert 30 comporte un fond 32 percé par un orifice 33 circulaire, et quatre faces latérales 34 rectangulaires relevées à angle droit pour former un réceptacle en forme de parallélépipède. Chaque face latérale 34 est ajourée par une ouverture 35 rectangulaire, à l'intérieur de laquelle s'étend une patte de fixation 36 flexible légèrement pliée vers l'extérieur, de manière à assurer le maintien en place et le blocage de l'insert 30 dans le trou 31 du support 29. Deux faces latérales 34 opposées sont prolongées par deux ailes 37a, 37b élastiques repliées vers l'extérieur en sens inverse l'une de l'autre en formant chacune un angle d aigu avec la direction horizontale. Après la mise en place de l'insert 30 dans le trou 31, la présence des deux ailes 37a, 37b élastiques permet d'absorber différentes épaisseurs de l'élément 21 suite à l'élasticité de la zone de flexion 39.

L'orifice 33 du fond 32 de l'insert 30 est avantageusement circulaire pour éviter tout problème de positionnement de l'insert par rapport à la goupille 11, et vice versa. Les ergots 40 extérieurs du corps 12 s'accrochent à l'arrière de l'orifice 33 de l'insert 30 suite à l'enfoncement de la goupille 11 provoquant l'écartement de la deuxième paire de pattes 25a, 25b.

Le trou 38 de passage du rivet 10 dans l'élément 22 à fixer présente à titre d'exemple une section circulaire, mais d'autres formes sont possibles à condition que les ailettes 20a, 20b du corps 12 puissent prendre appui sur la surface supérieure 21 de l'élément 22.

Le montage du rivet 10 pour l'assemblage de l'élément 22 au support 29 s'effectue de la manière suivante :

L'utilisation de l'insert 30 est possible indépendamment du matériau du support 29, qu'il soit métallique ou en plastique déformable. L'usage de l'insert 30 permet de s'adapter au support 29 dont la forme du trou 31 n'est pas toujours prévue pour un accrochage optimum du rivet.

### Absence de l'insert 30

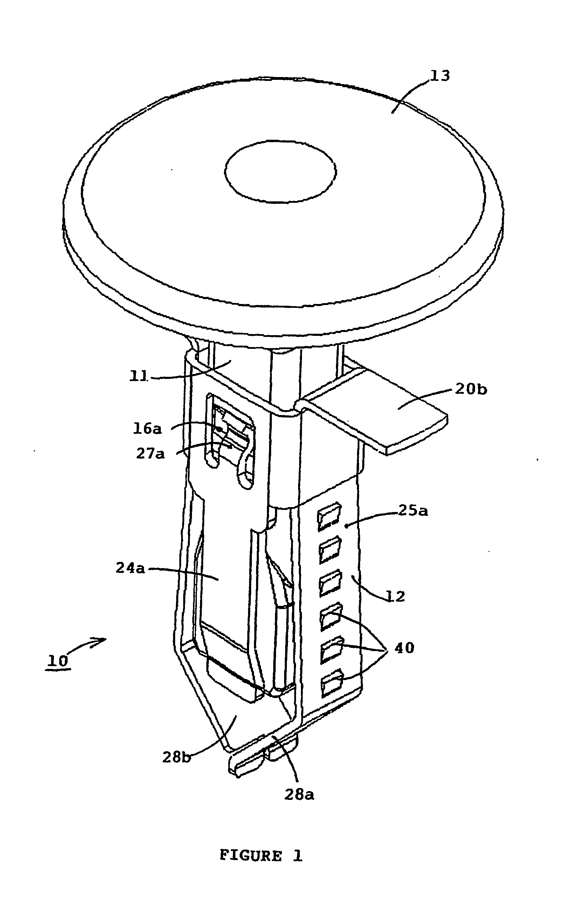

Dans le cas d'un support 29 rigide avec absence de l'insert 30, on utilise directement le rivet 10 avec la goupille 11 prémontée dans le corps 12 de retenue (figure 1). La goupille 11 se trouve maintenue en position haute de prémontage après engagement des lamelles ressorts 27a, 27b de la première paire de pattes de guidage 24a, 24b dans les premiers crans 16a, 16b du fût 14.

La forme du trou 31 du support 29 doit être dimensionnée pour recevoir la deuxième paire de pattes d'accrochage 25a, 25b du corps 12. La forme idéale est un trou 31 circulaire pour éviter tout problème de positionnement du corps 12 par rapport à la goupille 11.

Les extrémités 28a, 28b en V des pattes d'accrochage 25a, 25b du corps 12 facilitent l'introduction du rivet 10 dans le trou 38 de passage de l'élément 22, et dans le trou 31 du support 29. On enfonce le rivet 10 jusqu'à ce que les ailettes 20a, 20b du corps 12 viennent en appui contre la surface supérieure 21 de l'élément 22 à fixer.

Une poussée exercée sur la goupille 11 dans la direction d'enfoncement provoque ensuite l'échappement des lamelles ressorts 27a, 27b hors des premiers crans 16a, 16b du fût 14, suivi après une certaine course de leur introduction dans les deuxièmes crans 17a, 17b. La goupille 11 se trouve alors dans la position basse de verrouillage suite à l'écartement des pattes d'accrochage 25a, 25b du corps 12 provoquant l'incrustation des ergots 40 dans le support 29.

### Présence de l'insert 30

Le trou 31 dans le support 29 présente alors une forme carrée légèrement supérieure aux dimensions extérieures de l'insert 30. Après avoir clippé l'insert 30 dans le trou 31, l'ancrage des quatre pattes de fixation 36 permet un montage imperdable sur le support 29. La présence des deux ailes 37a, 37b flexibles autorise d'autre part différentes épaisseurs du support 29.

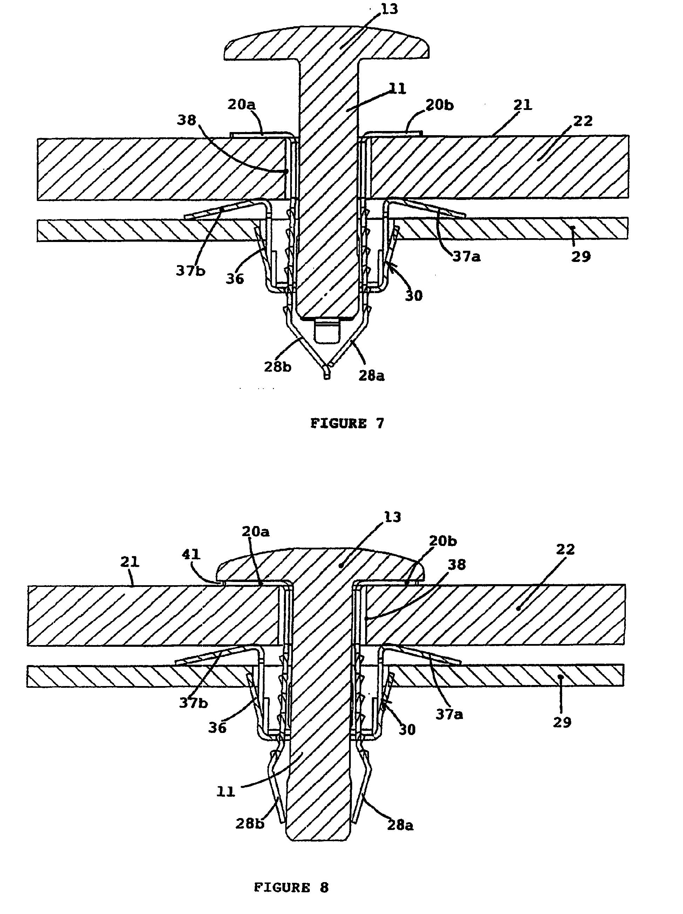

Les opérations d'enfoncement et de verrouillage du rivet 10 sont représentées sur les figures 7 et 8, et s'opèrent de la même manière que dans la solution sans insert précédemment décrite. La seule différence concerne les ergots 40 des pattes d'accrochage 25a, 25b qui s'accrochent sous l'orifice 33 circulaire de l'insert 30, au lieu de s'agripper à la surface inférieure du support 29 dans la position basse de verrouillage de la goupille 11.

L'élément 22 à fixer peut avoir différentes épaisseurs, le rattrapage s'effectuant au moyen des ergots 40 échelonnés sur les pattes d'accrochage 25a, 25b dans le sens de la hauteur.

### Démontage du rivet 10

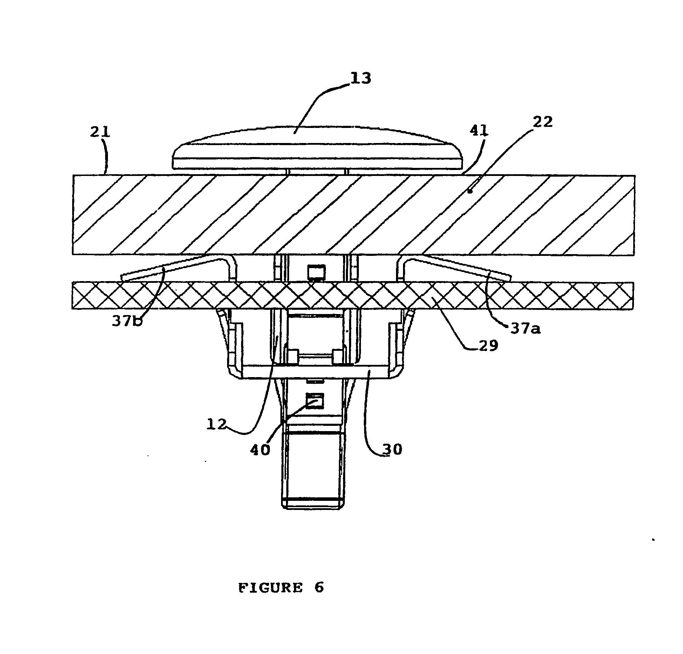

Sur les figures 6 et 8 illustrant la position basse de verrouillage de la goupille 11, un intervalle 41 est ménagé entre la tête 13 de la goupille 11 et la surface supérieure 21 de l'élément 22 à fixer. L'épaisseur de l'intervalle 41 correspond sensiblement à l'épaisseur des ailettes 20a, 20b du corps 12. II suffit d'introduire une lame de tournevis dans cet intervalle 41 en déplaçant la goupille 11 vers le haut pour faire sortir les lamelles ressorts 27a, 27b hors des premiers crans 16a, 16b du fût 14. On tire sur la goupille 11 jusqu'à l'engagement des lamelles ressorts 27a, 27b dans les deuxièmes crans 17a, 17b correspondant à la position haute (figures 7,et 5).

La poursuite du mouvement d'extraction permet ensuite le retrait total du rivet 10 étant donné que l'effort de dégagement des lamelles ressorts 27a, 27b dans les deuxièmes crans 17a, 17b est supérieur à l'effort d'extraction de l'ensemble du rivet 10 lorsque la goupille 11 se trouve dans la position haute de déverrouillage et de prémontage.

Les avantages du rivet 10 métallique selon l'invention sont les suivants :
- bonne tenue mécanique et résistance à l'arrachement élevée lorsque la goupille 11 est en position basse de verrouillage ;
- facilité de montage du rivet sans outil ;
- plusieurs épaisseurs possibles pour le support 29 et l'élément 22 à fixer ;
- démontage et extraction du rivet 10 métallique après déverrouillage de la goupille 11;
- rivet réutilisable plusieurs fois.

## Revendications

1. Rivet de fixation comprenant un corps (12) de retenue équipé de moyens d'accrochage, et une goupille (11) d'actionnement destinée à déplacer les moyens d'accrochage vers une position active de verrouillage,
**caractérisé en ce que**
- la goupille (11) comporte un fût (14) allongé équipé d'au moins un premier cran (16a, 16b) et un deuxième cran (17a, 17b) échelonnés longitudinalement le long du fût (14),
- le corps (12) de retenue est réalisé à partir d'une tôle métallique découpée et pliée, ayant une première paire de pattes (24a, 24b) de guidage du fût (14), et une deuxième paire de pattes (25a, 25b) élastiques munies d'une série d'ergots (40) d'accrochage assurant un verrouillage positif en fin de course d'enfoncement de la goupille (11) dans le corps (12).

2. Rivet de fixation selon la revendication 1, **caractérisé en ce que** la première paire de pattes (24a, 24b) de guidage est munie d'au moins une lamelle ressort (27a, 27b) coopérant soit avec le premier cran (16a, 16b) du fût (14) dans une position haute de prémontage de la goupille (11) soit avec le deuxième cran (17a,17b) dans une position basse de verrouillage.

3. Rivet de fixation selon la revendication 1, **caractérisé en ce que** les pattes d'accrochage (25a, 25b) de la deuxième paire sont plus longues que les pattes de guidage (24a, 24b) de la première paire, et comportent des extrémités (28a, 28b) recourbées l'une vers l'autre pour former une zone d'actionnement en V provoquant l'écartement desdites pattes d'accrochage lors de l'enfoncement de la goupille (11).

4. Rivet de fixation selon la revendication 1 **caractérisé, en ce que** le corps (12) est doté de deux ailettes (20a, 20b) latérales ménagées à la partie supérieure de la deuxième paire de pattes (25a, 25b).

5. Rivet de fixation selon la revendication 1, **caractérisé en ce que** les ergots (40) sont répartis longitudinalement dans la partie intermédiaire de chaque patte (25a, 25b) de la deuxième paire.

6. Rivet de fixation selon la revendication 2, **caractérisé en ce que** chaque patte de guidage (24a, 24b) de la première paire est pourvue à l'opposé de la lamelle ressort (27a, 27b) d'une languette de pression (26a, 26b) sollicitée élastiquement contre le fût (14) pour maintenir la goupille (11) dans la direction longitudinale d'insertion.

7. Rivet de fixation selon la revendication 1, **caractérisé en ce que** la goupille (11) comporte une tête (13) de section supérieure à celle du fût (14).

8. Rivet de fixation selon la revendication 7, **caractérisé en ce que** le fût (14) possède une section quadrangulaire.

9. Rivet de fixation selon l'une des revendications précédentes, **caractérisé en ce que** le verrouillage de la deuxième paire de pattes (25a, 25b) s'effectue à l'arrière d'un orifice (33) circulaire prévu dans le fond (32) d'un insert (30) métallique.

## Claims

1. Fixing rivet comprising a retaining body (12) including attachment means and an actuation pin (11) adapted to move the attachment means toward an active locking position, **characterised in that**
- the pin (11) includes an elongate shank (14) including at least one first detent (16a, 16b) and one second detent (17a, 17b) staggered longitudinally along the shank (14),
- the retaining body (12) is cut and bent from sheet metal and has a first pair of lugs (24a, 24b) for guiding the shank (14) and a resilient second pair of lugs (25a, 25b) including a series of attachment studs (40) providing positive locking at the end of the stroke of depression of the pin (11) into the body (12).

2. Fixing rivet according to claim 1, **characterised in that** the first pair of guide lugs (24a, 24b) includes at least one leaf spring (27a, 27b) cooperating either with the first detent (16a, 16b) of the shank (14) in a high premounting position of the pin (11) or with the second detent (17a, 17b) in a low locking position.

3. Fixing rivet according to claim 1, **characterised in that** the attachment lugs (25a, 25b) of the second pair are longer than the guide lugs (24a, 24b) of the first pair and have ends (28a, 28b) curved toward each other to form a V-shaped actuation area causing said attachment lugs to separate on depression of the pin (11).

4. Fixing rivet according to claim 1, **characterised in that** the body (12) is provided with two lateral flanges (20a, 20b) in the upper portion of the second pair of lugs (25a, 25b).

5. Fixing rivet according to claim 1, **characterised in that** the studs (40) are distributed longitudinally in the intermediate portion of each lug (25a, 25b) of the second pair.

6. Fixing rivet according to claim 2, **characterised in that** each guide lug (24a, 24b) of the first pair has opposite the leaf spring (27a, 27b) a pressure tongue (26a, 26b) that is urged elastically against the shank (14) to retain the pin (11) in the longitudinal insertion direction.

7. Fixing rivet according to claim 1, **characterised in that** the pin (11) includes a head (13) of larger section than the shank (14).

8. Fixing rivet according to claim 7, **characterised in that** the shank (14) has a quadrangular section.

9. Fixing rivet according to any one of the preceding claims, **characterised in that** the locking of the second pair of lugs (25a, 25b) is effected to the rear of a circular orifice (33) provided in the bottom (32) of a metal insert (30).

## Patentansprüche

1. Befestigungsniet, der einen mit Verbindungsmitteln versehenen Rückhaltekörper (12) und einen Betätigungsstift (11) aufweist, der dazu eingerichtet ist, die Verbindungsmittel in eine aktive Verriegelungsstellung zu bewegen,
**dadurch gekennzeichnet, dass**
- der Stift (11) über einen länglichen Schaft (14) mit wenigstens einem ersten Einschnitt (16a, 16b) und mit einem zweiten Einschnitt (17a, 17b) verfügt, die stufenweise in Längsrichtung entlang des Schafts (14) angeordnet sind,
- der Rückhaltekörper (12) aus einem gestanzten und gebogenen Metallblech hergestellt ist und über ein erstes Paar von Laschen (24a, 24b) zur Führung des Schafts (14) sowie über ein zweites Paar flexibler Laschen (25a, 25b) mit einer Reihe von Verbindungsnasen (40) verfügt, die in der Endstellung nach dem Einführen des Stifts (11) in den Körper (12) eine korrekte Verriegelung schaffen.

2. Befestigungsniet nach Anspruch 1, **dadurch gekennzeichnet, dass** das erste Paar Führungslaschen (24a, 24b) mit wenigstens einer Blattfeder (27a, 27b) versehen ist, die entweder in einer erhabenen Vormontagestellung des Stifts (11) mit dem ersten Einschnitt (16a, 16b) des Schafts (14) oder in einer vertieften Verriegelungsstellung mit dem zweiten Einschnitt (17a, 17b) zusammenwirkt.

3. Befestigungsniet nach Anspruch 1, **dadurch gekennzeichnet, dass** die Verbindungslaschen (25a, 25b) des zweiten Paares länger als die Führungslaschen (24a, 24b) des ersten Paares sind und Enden (28a, 28b) aufweisen, die zueinander gekrümmt sind, um einen V-förmigen Betätigungsbereich zu bilden, der zu einem Auseinanderbewegen dieser Verbindungslaschen während des Einführens des Stifts (11) führt.

4. Befestigungsniet nach Anspruch 1, **dadurch gekennzeichnet, dass** der Körper (12) zwei seitliche Flügel (20a, 20b) aufweist, die am oberen Teil des zweiten Laschenpaares (25a, 25b) angeordnet sind.

5. Befestigungsniet nach Anspruch 1, **dadurch gekennzeichnet, dass** die Nasen (40) in Längsrichtung in dem Zwischenteil jeder Lasche (25a, 25b) des zweiten Paares angeordnet sind.

6. Befestigungsniet nach Anspruch 2, **dadurch gekennzeichnet, dass** jede Führungslasche (24a, 24b) des ersten Paares gegenüber der Blattfeder (27a, 27b) mit einer Druckzunge (26a, 26b) ausgebildet ist, die flexibel gegen den Schaft (14) anliegt, um den Stift (11) in der Längsrichtung der Einführung zu halten.

7. Befestigungsniet nach Anspruch 1, **dadurch gekennzeichnet, dass** der Stift (11) über einen Kopf (13) oberhalb des Kopfbereichs des Schafts (14) verfügt.

8. Befestigungsniet nach Anspruch 7, **dadurch gekennzeichnet, dass** der Schaft (14) einen viereckigen Querschnitt aufweist.

9. Befestigungsniet nach einem der vorangehenden Ansprüche, **dadurch gekennzeichnet, dass** die Verriegelung des zweiten Laschenpaares (25a, 25b) hinter einer kreisförmigen Öffnung (33) in der Rückwand (32) eines Metalleinsatzes (30) erfolgt.
